# EUROPÄISCHE PATENTANMELDUNG

(11) **EP 4 390 554 A1**
(43) Veröffentlichungstag der Anmeldung: **26.06.2024**
(21) Anmeldenummer: 23218676.7
(22) Anmeldetag: 20.12.2023
(51) Int. Cl.: G03H 1/04, G03H 1/00, G03H 1/20, G03H 1/02

(54) **HOHLSPIEGELARTIGES MASTERHOLOGRAMM UND VERFAHREN SOWIE VORRICHTUNG ZU DESSEN HERSTELLUNG**

(30) Priorität: 20.12.2022 DE 102022214090
(71) Anmelder: Bundesdruckerei GmbH, 10969 Berlin (DE)
(72) Erfinder: Tries, Alexander, 10553 Berlin (DE); Kunath, Christian, 12203 Berlin (DE); Gahlbeck, Jeffry, 15517 Fürstenwalde (DE); Sprenger, Martin, 10317 Berlin (DE); Klünder, Kathrin, 10179 Berlin (DE); Stadler, Vivien, 13353 Berlin (DE)
(74) Vertreter: Patentanwälte Bressel und Partner mbB

(57) **Zusammenfassung**

Die Erfindung betrifft ein Verfahren zum Herstellen eines Masterhologramms (45) für ein Kontaktkopierverfahren umfassend die Schritte: Erzeugen von erstem kohärentem Licht (110) und hierzu kohärentem zweiten kohärenten Licht (120), Einstrahlen des ersten Lichts (110) auf den diffusen Streuer (10) zum Erzeugen diffus gestreuten Lichts (115), das durch eine unmittelbar benachbart zu dem diffusen Streuer (10) angeordnete Blende (20) eingegrenzt und von eine Fourier-Linse (30), in deren einer Brennebene (32) der diffuse Streuer angeordnet ist, in das holografische Aufzeichnungsmaterial (40) als Objekt-Licht (119) geleitet wird, und das zu dem ersten kohärenten Licht (110) kohärente zweite Licht (120) von einer der Fourier-Linse (30) abgewandten Seite in das holografische Aufzeichnungsmaterial (40) als ein Referenzlicht (129) eingestrahlt wird, um in dem holografischen Aufzeichnungsmaterial (40) ein flächiges Reflexionsvolumenhologramm (45) auszubilden, wobei das Referenzlicht (129) als von einer punktförmigen oder strichförmigen Quelleregion (127) aus divergierendes Lichtfeld (128) erzeugt wird. Die Erfindung betrifft ferner eine Vorrichtung zur Herstellung von Masterhologrammen, ein Verfahren zum Herstellen individualisierter Hologramme mit einem hohlspiegelartigen Hologramm und Hologramme eines gemäß einem individualisierten Muster eine unterschiedliche Beugungseffizienz aufweisenden hohlspiegelartigen flächigen Streuers.

## Beschreibung

Die Erfindung betrifft ein Verfahren sowie eine Vorrichtung zum Herstellen eines Masterhologramms für ein Kontaktkopierverfahren, ein solches Masterhologramm sowie ein Verfahren zum Herstellen von individualisierten Hologrammen und individualisierte Hologramme, die mit einem solchen Masterhologramm im Kontaktkopierverfahren hergestellt sind.

Aus dem Stand der Technik ist es bekannt, Sicherheitsdokumente mit Sicherheitselementen zu versehen, die einen Schutz gegen Nachahmung, Verfälschung und/oder unautorisiertes Herstellen eines Sicherheitsdokuments liefern. Merkmale, die ein Sicherheitsdokument gegen eine Verfälschung und/oder Nachahmung sichern und/oder eine Verifikation einer Echtheit des Sicherheitsdokuments und/oder darin gespeicherter Informationen ermöglichen, werden als Sicherheitsmerkmale bezeichnet. Entitäten, die ein solches Sicherheitsmerkmal umfassen, werden auch als Sicherheitselement bezeichnet.

In vielen Sicherheitsdokumenten, beispielsweise Reisepässen, Personalausweisen, Kreditkarten, gegen Fälschungen abgesicherte Eintrittskarten, Zertifikaten und/oder Verpackungen, Führerscheinen, aber auch Banknoten oder andere Wertdokumenten, um nur einige zu nennen, sind Sicherheitsmerkmale ausgebildet und/oder integriert, die ein Hologramm umfassen. Hochwertige und schwer zu fälschende Sicherheitsdokumente weisen hierbei zum Teil individualisierte Hologramme auf, die als Volumenhologramme ausgebildet sind. Insbesondere werden hierfür Volumenreflexionshologramme eingesetzt, welche mit einfachen Mitteln gut verifiziert werden können und nur mit einem hohen Aufwand nachgebildet und/oder verfälscht werden können.

Volumenreflexionshologramme weisen eine hohe Wellenlängen- und Winkelselektivität hinsichtlich des Lichts auf, welches zur Rekonstruktion verwendet werden kann. Hierdurch ist es möglich, Volumenreflexionshologramme mit Weißlicht zu rekonstruieren. Als Beispiel für Sicherheitselemente, die ein solches individualisiertes Volumenreflexionshologramm umfassen, ist ein Identigram^{®} zu nennen, welches in deutschen Reisepässen und/oder Personalausweisen integriert ist. Zur Individualisierung des darin gespeicherten Volumenreflexionshologramms wird beispielsweise ein Gesichtsbild der Person verwendet, in deren Ausweisdokument das entsprechende individualisierte Hologramm eingefügt ist. Zusätzlich sind bei einem Identigram auch personenbezogene Daten in Form von alphanumerischen Schriftzeichen sowie weitere z. T. nicht individualisierte Sicherheitsmerkmale integriert. Die individualisierten Bestandteile werden hergestellt, indem flächige Bereiche des Masterhologramms mit räumlich moduliertem Licht in einem Kontaktkopierverfahren in das individualisierte Hologramm kopiert werden. Die flächigen Bereiche des Masterhologramms, welche für die Individualisierung vorgesehen sind, weisen hierbei eine flächig homogene Beugungsstruktur auf, beispielsweise ein Hologramm einer Streuscheibe oder auch eines Spiegels. Ein Hologramm einer Streuscheibe als Masterhologramm bietet den Vorteil, dass bei der Verifikation das verwendete Referenzlicht in einen Streukegel gebeugt wird, sodass ein Winkelbereich, unter dem das rekonstruierte Hologramm sichtbar wird, einen etwas größeren Raumwinkelbereich ausfüllt, was eine optische Wahrnehmbarkeit steigert bzw. die exakten geometrischen Bedingungen für die Rekonstruktion "aufweicht". Ist beispielsweise das Masterhologramm ausgebildet, senkrecht auf das Hologramm einfallendes Licht unter 45° reflektierend zu beugen, so wird durch die Streueigenschaft sowohl der Winkelbereich für die Einstrahlung als auch für die beugende Reflexion jeweils um einige Grad aufgeweitet, die mit dem Öffnungswinkel der Streukeule der Streuscheibe korrespondieren, welche zum Herstellen des Masterhologramms verwendet wurde.

Aus der EP 0 896 260 A2 ist ein mögliches Verfahren bekannt, wie Masterhologramme nach dem Stand der Technik hergestellt werden können. Alternativ zu dem dort beschriebenen Verfahren, bei dem aus einer Streuscheibe zunächst ein Transmissionshologramm hergestellt wird, welches anschließend so rekonstruiert wird, dass dessen reales Bild in der Ebene eines holografischen Aufzeichnungsmaterials rekonstruiert wird, in welches dieses reale Bild dann als Reflexionshologramm einbelichtet wird, kann ein Hologrammmaster eines flächig homogen streuenden Objekts auch hergestellt werden, indem eine Kontaktkopie einer Streuscheibe unmittelbar in ein Masterhologramm belichtet wird.

Die DE 10 2015 220 123 A1 beschreibt ein Verfahren zum Herstellen eines Masterhologramms für ein Kontaktkopierverfahren, ein solches Masterhologramm sowie ein Verfahren zum Herstellen von individualisierten Hologrammen und individualisierte Hologramme, die mit einem solchen Masterhologramm im Kontaktkopierverfahren hergestellt sind. Das Verfahren zum Herstellen eines Masterhologramms umfasst die Schritte: Anordnen eines diffusen Streuers, einer Blende, einer Fourier-Linse und eines holografischen Aufzeichnungsmaterials auf einer optischen Anordnungsachse, so dass eine optischen Achse der Fourier-Linse, eine Oberflächennormale des holografischen Aufzeichnungsmaterials und eine Oberflächennormale einer Blendenöffnungsebene der Blende kollinear zur optischen Anordnungsachse sind, wobei die Blende zwischen dem diffusen Streuer und der Fourier-Linse unmittelbar an den diffusen Streuer angrenzend angeordnet wird und der diffuse Streuer in einer Brennebene der Fourier-Linse angeordnet wird und kohärentes erstes Licht auf den diffusen Streuer eingestrahlt wird, um hierdurch das diffus gestreute Licht zu erzeugen, welches mittels der Blende eingegrenzt und mittels der Fourier-Linse in das holografische Aufzeichnungsmaterial als Objekt-Licht geleitet wird und zu dem ersten kohärenten Licht kohärentes zweites kohärentes Licht von einer der Fourier-Linse abgewandten Seite in das holografische Aufzeichnungsmaterial als Referenzlicht eingestrahlt wird, um in dem holografischen Aufzeichnungsmaterial ein Reflexionsvolumenhologramm auszubilden.

An Sicherheitsdokumenten, die ein Volumenreflexionshologramm umfassen, das mit einem der aus dem Stand der Technik bekannten Hologrammaster im Kontaktkopierverfahren hergestellt ist und eine flächig ausgedehnte Information wie beispielsweise das Gesichtsbild und persönliche Daten umfasst, wurde festgestellt, dass die Verifikation in praktischen Situationen häufig deshalb schwierig ist, da nur bei günstigen Beleuchtungsbedingungen das ganze Volumenhologramm flächig rekonstruiert. Somit kann in vielen Situationen jeweils nur ein Teil der Gesamtinformation erfasst werden. Dieses ist sehr nachteilig.

Der Erfindung liegt somit die technische Aufgabe zugrunde hinsichtlich einer Erfassbarkeit bei der Rekonstruktion verbesserte im Kontaktkopierverfahren hergestellte und insbesondere individualisierte Volumenhologramme sowie ein Masterhologramm für ein solches Kontaktkopierverfahren und ein Verfahren sowie eine Vorrichtung zur Herstellung eines solchen Masterhologramms für Volumenhologramme mit verbesserten Rekonstruktionseigenschaften zu schaffen.

Die Aufgabe wird durch ein Verfahren zum Herstellen eines Masterhologramms mit den Merkmalen des Patentanspruchs 1, eine Vorrichtung zum Herstellen eines Masterhologramms mit den Merkmalen des Patentanspruchs 5, ein Hologrammmaster mit en Merkmalen des Patentanspruchs 11, ein Verfahren zum Herstellen eines individualisierten Hologramms mit den Merkmalen des Patentanspruchs 12, sowie ein individualisiertes Volumenhologramm mit den Merkmalen des Patentanspruchs 13 gelöst. Vorteilhafte Ausgestaltungen ergeben sich aus den Unteransprüchen.

### Grundidee der Erfindung

Der Erfindung liegt die Idee zugrunde den Hologrammmaster aus dem Stand der Technik so zu verändern, dass dieser eine fokussierende Eigenschaft beim Rekonstruieren aufweist. Somit wird das Bild bei der Rekonstruktion zu einem Betrachtungsort fokussiert. Eine solche Eigenschaft weisen beispielsweise Hohlspiegel auf. Die Eigenschaft eines flächigen, hinsichtlich der Beugungseffizienz homogen Masters soll mit der Eigenschaft eines Hohlspiegels kombiniert werden. Da ein Hohlspiegelartiger Streuer schwierig zu produzieren ist und hinsichtlich der Reproduzierbarkeit, unerwünschten Schwankungen unterliegt, wird das Lichtfeld des Referenzlichts gegenüber dem im Stand der Technik bei der Hologrammmasterherstellung verwendeten Lichtfeld paralleler Strahlen in ein von einer Quellregion aus divergierendes Lichtfeld verändert. Ein solches Lichtfeld ähnelt oder gleicht, abgesehen von der Ausbreitungsrichtung, einem Lichtfeld das aus parallelen Lichtstrahlen in einem Hohlspiegel erzeugt wird. Daher wird diese hohlspiegelartige Eigenschaft dem Objektlicht "aufgeprägt", wenn das Referenzlicht als aus einer Quellregion divergierendes Lichtfeld ausgebildet ist. Die Quellregion wird vorzugsweise punktförmig oder strichförmig gewählt.

### Definitionen

Als Volumenhologramm wird ein Hologramm bezeichnet, in dem die Information in einem Volumenbereich eines holografischen Aufzeichnungsmaterials gespeichert ist. Hierbei sind die Abmessungen des Volumenbereichs so, dass die Kantenlängen des Volumenbereichs jeweils deutlich größer als eine mittlere Gitterkonstante der die Hologramminformationen speichernden Interferenzstrukturen sind. Bei einem Hologrammfilm als speichernder Schicht bedeutet dieses, dass eine Filmdicke oder Schichtdicke größer, vorzugsweise um mindestens einen Faktor 10 größer, als diese mittlere Gitterkonstante ist. Solche Hologramme werden auch als dicke Hologramme bezeichnet.

Als Volumenreflexionshologramm wird ein Hologramm bezeichnet, welches ein Bild auf der Seite des holografischen Aufzeichnungsmaterials rekonstruiert, von der aus das Rekonstruktionslicht eingestrahlt wird. Ein solches Hologramm wird durch eine Belichtung geschaffen, bei der Referenzlicht und Objektlicht von unterschiedlichen Seiten in das holografische Aufzeichnungsmaterial eingestrahlt sind.

Ein Volumentransmissionshologramm ist ein Volumenhologramm, bei dem das Referenzlicht und das Objektlicht bei der Aufzeichnung von derselben Seite in das holografische Aufzeichnungsmaterial eingestrahlt werden.

Als diffuser Streuer wird ein Gegenstand bezeichnet, der gerichtetes und paralleles Licht in unterschiedliche Richtungen innerhalb eines Raumwinkelbereichs transmittiert oder reflektiert. Als Diffusor wird hierbei ein diffuser Streuer bezeichnet, der gerichtetes Licht bei der Transmission des Lichts in diffus gestreutes Licht überführt.

Als unmittelbar angrenzend werden eine Blende und ein Streuer angesehen, wenn diese in einem optischen Aufbau dicht beieinander angeordnet sind. Je nach Ausgestaltung des Streuers oder der Blende kann es erforderlich sein, stabilisierende Elemente wie eine transparente Glasscheibe vorzusehen, die zwischen dem Streuer und der Blende angeordnet sind. Der Abstand zwischen der Blendeneben und einer Austrittseben des Streuers ist jedoch vorzugsweise kleiner als 1/100 der Brennweite der Fourier-Linse in dem beschriebenen erfindungsgemäßen Grundaufbau.

Als holografisches Aufzeichnungsmaterial wird jedes Material bezeichnet, welches geeignet ist, um darin ein Volumenhologramm einzubelichten. Insbesondere kann ein holografisches Aufzeichnungsmaterial ein Hologrammfilm sein. Insbesondere eignen sich auf Fotopolymerbasis hergestellte Hologrammfilme. Es können jedoch auch Hologrammfilme verwendet werden, die auf Silberhalogenidbasis hergestellt sind, insbesondere gebleichte Silberhalogenidfilme. Andere Materialien sind Dichromatgelantine oder photorefraktive Kristalle.

Es wird im Folgenden jeweils davon ausgegangen, dass das holografische Aufzeichnungsmaterial bzw. ein Hologrammmaster oder Masterhologramm jeweils glatt, flächig und eben ausgebildet sind. Kleinere Abweichungen zur Beseitigung von Abbildungsfehlern oder Ähnlichem sind hiervon nicht berührt.

Eine Fourier-Linse ist eine Sammellinse, die im Herstellungsprozess eines Hologramms verwendet wird.

Die Achse, welche durch einen Mittelpunkt einer solchen Sammellinse und die Fokuspunkte oder Brennpunkte der Sammellinse verläuft, wird als optische Achse der Linse bezeichnet.

Als optische Anordnungsachse wird die Zentralachse einer optischen Bank oder beliebigen anderen optischen Anordnung verstanden, entlang derer unterschiedliche, eine Lichtausbreitung beeinflussende Objekte, wie beispielsweise Streuer, Blenden, Linsen, aber auch Aufzeichnungsmaterialien oder Ähnliches angeordnet werden. Diese Achse wird auch als Hauptachse bezeichnet.

Eine Brennebene ist eine durch einen Brennpunkt einer Linse verlaufende Ebene, welche senkrecht zur optischen Achse der entsprechenden Linse orientiert ist. Dies bedeutet, dass eine Oberflächennormale der Brennebene und die optische Achse der Linse kollinear zueinander sind.

Eine Blende ist ein Gegenstand, welcher eine oder mehrere Öffnungen aufweist und ansonsten für Licht undurchlässig ist.

Eine Blendenöffnungsebene ist eine Ebene, in welcher eine senkrecht zu dieser Ebene ausgeführte Projektion einer Blendenöffnung eine maximale Ausdehnung in der entsprechenden Ebene aufweist. Die Ebene verläuft durch einen Mittelpunkt der Blendenöffnung.

Eine Loch-Ring-Blende ist eine Blende, welche eine zentrale Öffnung in Form eines Lochs und mindestens eine das Loch zumindest über einen Winkelabschnitt umgebende ringförmige Öffnung zusätzlich aufweist. Bei einer solchen Blende wird als Blendenöffnungsebene jene Ebene angesehen, die bezogen auf das mindestens eine Loch definiert ist.

Eine Lochblende (im englischen auch als Pinhole bezeichnet) ist eine Blende mit einer kleinen in der Regel kreisförmigen Öffnung.

Eine Spaltblende, auch als Schlitzblende bezeichnet, ist eine Blende mit einem geraden, strichförmigen oder einem rechteckigen Spalt.

Eine Loch- oder Spaltblende ist eine Blende, die entweder als Lochblende oder als Spaltblende ausgebildet ist. Der Begriff wird zur sprachlichen Vereinfachung eingeführt.

Eine Spaltbreite oder Lochgröße liegen oberhalb der Größenordnung der Wellenlänge des genutzen Lichts, so dass an dieser keine nennenswerten Beugungseffekte auftreten. Ein Hologrammmaster ist ein Master, von dem ein Hologramm hergestellt wird.

Ein Masterhologramm ist ein als Hologramm ausgebildeter Master. Beispielsweise dient eine Mattscheibe im Stand der Technik als Hologrammmaster. Das davon in Kontaktkopie hergestellte Volumenreflexionshologramm stellt ein Masterhologramm dar, welches im Kontaktkopierverfahren zur Herstellung individualisierter Sicherheitselemente als Hologrammmaster eingesetzt werden kann. Dieses Masterhologramm ist dann in dem Kontaktkopierverfahren auch der Hologrammmaster für die individualisiert hergestellten Sicherheitselemente, die jeweils ein individualisiertes Volumenhologramm besitzen, welches von dem Masterhologramm im Kontaktkopierverfahren räumlich selektiert kopiert ist.

Die Formulierung "hierin beschreiben" soll ausdrücken, dass auf die in dieser Beschreibung und den Ansprüchen beschriebenen Erfindung Bezug genommen wird.

### Bevorzugte Ausführungsformen

Es wird ein Verfahren zum Herstellen eines Masterhologramms für ein Kontaktkopierverfahren, insbesondere für ein Kontaktkopierverfahren mit räumlich moduliertem Licht, vorgeschlagen, welches die Schritte umfasst: Erzeugen von erstem kohärenten Licht und hierzu kohärentem zweiten kohärenten Licht, Einstrahlen des ersten kohärenten Lichts auf einen diffusen Streuer zum Erzeugen diffus gestreuten Lichts, das durch eine unmittelbar benachbart zu dem diffusen Streuer angeordnete Blende eingegrenzt und von einer Fourier-Linse, in deren einer Brennebene der diffuse Streuer angeordnet ist, in das holografische Aufzeichnungsmaterial als ObjektLicht geleitet wird, und das zu dem ersten kohärenten Licht kohärente zweite kohärente Licht von einer von der Fourier-Linse abgewandten Seite in das holografische Aufzeichnungsmaterial als ein Referenzlicht eingestrahlt wird, um in dem holografischen Aufzeichnungsmaterial ein flächiges Reflexionsvolumenhologramm auszubilden, wobei das Referenzlicht als von einer punktförmigen oder strichförmigen Quelleregion aus divergierendes Lichtfeld erzeugt wird.

Ferner wird eine Vorrichtung zum Herstellen eines Masterhologramms für ein Kontaktkopierverfahren geschaffen, umfassend:
einen diffusen Streuer,
eine Blende,
eine Fourier-Linse und
ein holografisches Aufzeichnungsmaterial sowie
mindestens eine Lichtquelle zum Erzeugen ersten kohärenten Lichts und zu dem ersten kohärenten Licht kohärenten zweiten kohärenten Lichts,
wobei der diffuse Streuer, die Blende, die Fourier-Linse und
das holografische Aufzeichnungsmaterial auf einer optischen Anordnungsachse angeordnet sind, so dass eine optische Achse der Fourier-Linse und eine Oberflächennormale einer Blendenöffnungsebene der Blende kollinear zur optischen Anordnungsachse orientiert sind, wobei die Blende zwischen dem diffusen Streuer und der Fourier-Linse unmittelbar an den diffusen Streuer angrenzend angeordnet ist und der diffuse Streuer in einer Brennebene der Fourier-Linse angeordnet ist, und das kohärente erste Licht auf den diffusen Streuer eingestrahlt ist, um hierdurch das diffus gestreute Licht zu erzeugen, welches mittels der Blende eingegrenzt und mittels der Fourier-Linse in das holografische Aufzeichnungsmaterial als Objekt-Licht geleitet ist, und eine Referenzlichtoptik um aus dem zweiten kohärenten Licht ein von einer Quellregion aus divergierendes Lichtfeld zu erzeugen, das von einer von der Fourier-Linse abgewandten Seite des holografischen Aufzeichnungsmaterials in das holografische Aufzeichnungsmaterial als ein Referenzlicht eingestrahlt ist, um in dem holografischen Aufzeichnungsmaterial ein flächiges Reflexionsvolumenhologramm über eine Interferenz des Referenzlichts mit dem Objektlicht auszubilden.

In der Ebene des holografischen Aufzeichnungsmaterials ist das Lichtfeld des Referenzlichts, welches hier auch als zweites kohärentes Licht bezeichnet wird, divergent, es besitzt jedoch genau eine punktförmige Quellregion oder genau eine strichförmige Quellregion. Als strichförmige Quellregion kann hier eine Region aufgefasst werden, die einer entlang einer gradlinigen Strecke "ausgedehnten" punktförmigen Quellregion entspricht. Dieses bedeutet, dass das in das holografische Aufzeichnungsmaterial eintretende Referenzlicht entweder eine Quellposition oder einen Quellstrich aufweist, von dem aus das Licht divergent ausgeht. In strahlenoptischer Betrachtung bedeutet dieses, dass eine "Rückverfolgung" des Referenzlichts von jeder Position in dem holografischen Aufzeichnungsmaterial zu dem einen Quellpunkt, d.h. der punktförmigen Quellregion, oder zu dem einen Quellstrich, d.h. der strichförmigen Quellregion, führt. Hierbei befinden sich keine abbildenden oder streuenden optischen Elemente im Strahlengang zwischen der punktförmigen oder strichförmigen Quellregion und dem holografischen Aufzeichnungsmaterial.

Außerdem wird ein Verfahren zum Herstellen eines individualisierten Hologramms in einem Kontaktkopierverfahren geschaffen, umfassend die Schritte:
- Bereitstellen eines reflektierend beugenden Hologrammmasters;
- Anordnen eines holografischen Aufzeichnungsmaterials auf dem Hologrammmaster;
- Erfassen und/oder Empfangen von Individualisierungsdaten;
- Erzeugen kohärenten Lichts;
- räumliches Modulieren des erzeugten kohärenten Lichts anhand der Individualisierungsdaten; und
- Einstrahlen des räumlich modulierten Lichts durch das holografische Aufzeichnungsmaterial als Referenzlicht auf den Hologrammmaster, so dass dieser Licht in das holografische Aufzeichnungsmaterial als Objektlicht zurückbeugt und in dem holografischen Aufzeichnungsmaterial ein Volumenreflexionsholgramm belichtet wird, dadurch gekennzeichnet, dass
der Hologrammmaster nach einem hierin beschriebenen Verfahren hergestellt ist oder als Kontaktkopie eines Hologramms hergestellt ist, dass mit einem hierin beschriebenen Verfahren hergestellt ist.

Hiermit lassen sich somit individualisierte Hologramme herstellen, wobei diese jeweils ein gemäß einem individuellen räumlichen Muster mit variierender Beugungseffizienz kopiertes Volumenreflexionshologramm eines hohlspiegelartigen flächigen diffusen Streuers sind. Die Kopiervorlage, d.h. das Masterhologramm, ist vorzugsweise nach dem hierin beschriebenen Verfahren hergestellt. Man erhält somit Hologramme eines gemäß einem individualisierten Muster eine unterschiedliche Beugungseffizienz aufweisenden hohlspiegelartigen flächigen Streuers. Die in Serie hergestellten Hologramme unterscheiden sich aufgrund des beim Kopieren verwendeten individuellen Musters, welches festlegt, welche Ortsbereiche des Hologrammmasters, welches ein Masterhologramm ist, mit welcher Intensität in das Volumenhologramm kopiert werden. Hierüber werden die Beugungsintensitäten, mit der unterschiedliche Ortbereiche des hohlspiegelartigen flächigen Streuers in dem Volumenhologramm rekonstruieren, festgelegt. Beim Verifizieren, d.h. Rekonstruieren des Volumenhologramms, wird die flächige Erfassung aufgrund der hohlspiegelartigen Eigenschaft des Hologrammmasters, die in das Volumenhologramm beim Kopieren übertragen ist, begünstigt.

Über eine Festlegung eines Abstands der Quellregion von dem holografischen Aufzeichnungsmaterial beim Erzeugen des Hologrammmasters wird die "Brennweite" des hohlspiegelartigen Masterhologramms und somit auch die des hieraus im Kontaktkopierverfahren hergestellten, vorzugsweise individualisierten, Volumenreflexionshologramms festgelegt. Dieses wird vorzugsweise als Sicherheitselement in einem Wert- und/oder Sicherheitsdokument verwendet.

Bei einer sehr einfachen Ausführungsform wird die punktförmige Quellregion des Referenzlichts mittels eines Raumfilters erzeugt, der eine Fokussierungsoptik und eine Lochblende umfasst, oder die strichförmige Quellregion mittels einer Fokussierungsoptik und einer Spaltblende erzeugt. Die gewünschte Divergenz einzustellen ist jedoch schwierig und eingeschränkt. Ferner ist die Einstellung der Divergenz direkt mit der zur Belichtung zur Verfügung stehenden Intensität gekoppelt.

Die Vorrichtung zur Herstellung des Masterhologramms sieht bei dieser einfachen Ausführungsform vor, dass die Referenzoptik eine Loch- oder Spaltblende und eine Fokussieroptik zum Fokussieren des zweiten kohärenten Lichts auf oder vor der Lochoder Spaltblende umfasst, wobei die Öffnung der Loch- oder Spaltblende als Quellregion für das divergierende Lichtfeld des Referenzlichts dient, wobei die Loch- oder Spaltblende und die Fokussieroptik auf einer weiteren Anordnungsachse so angeordnet sind, dass ein Zentralstahl des divergierenden Lichtfelds des Referenzlichts kollinear mit der weiteren Anordnungsachse ist.

Besser und einfacher einzustellen ist beispielsweise eine Fokuslänge oder Brennweite des erzeugten hohlspiegelartigen Hologramms bei Ausführungsformen, bei denen aus dem zweiten kohärenten Licht zunächst ein Lichtfeld paralleler Strahlen erzeugt wird und die punktförmige Quellregion als Fokuspunkt oder Fokusline einer Sammellinse erzeugt wird, die um mehr als eine Brennweite der Sammellinse beabstandet von dem holografischen Aufzeichnungsmaterial in das Lichtfeld paralleler Strahlen angeordnet wird.

Bei einer verbesserten flexibleren Weiterbildung der Vorrichtung zum Herstellen eines Masterhologramms ist vorgesehen, dass die Referenzoptik eine Lochblende oder Spaltbelende, eine weitere Fourier-Linse und eine Sammellinse umfasst und die Lochoder Spaltblende, die eine weitere Fourier-Linse, die Sammellinse und das holografische Aufzeichnungsmaterial auf einer weiteren optischen Anordnungsachse angeordnet sind, wobei die Loch- oder Spaltblende in einer von dem holografischen Aufzeichnungsmaterial abgewandten Brennebene der weiteren Fourier-Linse angeordnet ist, und eine optische Achse der weiteren Fourier-Linse und eine Oberflächennormale einer Blendenöffnungsebene der Lochblende/oder Spaltblende kollinear zur weiteren optischen Anordnungsachse sind, und die Sammellinse zwischen der weiteren Fourier-Linse und dem holografischen Aufzeichnungsmaterial angeordnet ist, wobei die optische Achse der Sammellinse parallel zur weiteren Anordnungsachse orientiert ist und der Abstand der Sammellinse von dem holografischen Aufzeichnungsmaterial größer als deren Brennweite auf der dem holografischen Aufzeichnungsmaterial zugewandten Seite ist, so dass deren Fokuspunkt oder deren Fokusline als punkt- oder strichförmige Quellregion für das hieraus divergierende Lichtfeld des Referenzlichts dienen, das in dem holografischen Aufzeichnungsmaterial mit dem Objektlicht interferiert.

Die Brennweite des sich ergebenden Hohlspiegelartigen flächigen Streuers kann über eine Wahl des Abstands der Quellregion, von der aus das Lichtfeld divergiert, welches als Referenzlicht genutzt wird, von dem holografischen Aufzeichnungsmaterial eingestellt und gewählt werden. Wobei gegebenenfalls auch ein Öffnungswinkel des divergenten Lichtfelds anzupassen ist, um die flächenmäßige Größe des Referenzlichtfelds in dem holografischen Aufzeichnungsmaterial anzupassen. Dieser Öffnungswinkel kann beispielsweise bei einigen Ausführungsformen über die Wahl der Brennweite der Sammellinse erfolgen. Je kürzer die Brennweite ist, desto größer ist der Öffnungswinkel Für die Rekonstruktion des im Kontaktkopierverfahren hergestellten Volumenreflexionshologramms kann somit der Abstand eingestellt werden, unter dem das Volumenreflexionshologramm bevorzugt zu betrachten ist. Für menschliche Betrachter ist dieses ein Abstand von etwa 40 cm bis 50 cm. Vermehrt sollen jedoch auch digitale Abbildungen beispielsweise mittels eines mit einer Kamera ausgerüsteten Mobiltelefons (auch als Smartphone bezeichnet) erfasst werden. Hierbei erfolgen eine Rekonstruktion und Erfassung vorzugsweise aus einem Abstand von etwa 10 cm. Dieser Abstand ist in der Regel der Abstand, aus dem die Kamera die Fläche des Volumenhologramms vollständig erfassen kann. Somit variiert der Abstand ein wenig mit der Größe des Volumenreflexionsholograms, z.B. der Größe eines Dokuments, in das das Volumenreflexionshologram integriert ist, und der Brennweite eines Kameraobjektivs.

Bevorzugte Ausführungsformen sehen vor, dass die Anordnungsachse und die weitere Anordnungsachse nicht kollinear sind. Dieses bedeutet, dass eine Einstrahlrichtung des Objektlichts, welches parallel zur Anordnungsachse eingestrahlt wird, nicht diametral entgegengesetzt zum Referenzlicht oder genauer gesagt zu dessen Zentralstrahl orientiert ist. Ansonsten müsste das Licht zur Rekonstruktion aus der Position oder Richtung eingestrahlt werden, von der aus oder unter der das Hologramm erfasst werden soll.

Bei einer bevorzugten Ausführungsform ist eine Strahlachse, bezüglich derer das von der punktförmigen oder strichförmigen Quelleregion aus divergierende Referenzlicht symmetrisch divergiert, parallel zur Oberflächennormale des holografischen Aufzeichnungsmaterials orientiert. Das individualisierte Hologramm wird hierbei bei der Rekonstruktion unverzerrt auch bei einer flächigen Ausdehnung als Ganzes wahrgenommen.

Wird die Quellregion mittels einer Sammellinse erzeugt, so ist vorzugsweise eine optische Achse der Sammellinse parallel zu den parallelen Strahlen des Lichtfelds orientiert, dass zunächst als Lichtfeld paralleler Strahlen erzeugt ist.

Das Objektlicht wird hingegen bevorzugt unter einem Winkel gegenüber der Oberflächennormale des holografischen Aufzeichnungsmaterials eingestrahlt. So sehen bevorzugte Ausführungsformen vor, dass die optische Anordnungsachse, zu der das Objektlicht kollinear orientiert ist, mit der Oberflächennormale des holografischen Aufzeichnungsmaterials einen spitzen Winkel, vorzugsweise einen Winkel von 45° einschließt. Wenn zugleich der Zentralstahl des divergenten Referenzlichts parallel zur Oberflächennormale des holografischen Aufzeichnungsmaterials eingestrahlt wird, so ergibt sich eine 45°-90°-Rekonstruktionsgeometrie bei der eine Betrachtungsrichtung senkrecht zum Volumenreflexionshologramm gewählt werden kann, während das Volumenreflexionshologramm unter 45° zur Oberflächennormale beleuchtet wird.

Es sind jedoch auch Ausführungsformen möglich, bei denen die Winkel vom Objektlicht und Referenzlicht bei der Erzeugung des Masterhologramms genau umgekehrt gewählt werden.

Um die Winkel für die Rekonstruktion einfach einstellen zu können, ist bei einer Ausführungsform vorgesehen, dass zumindest der diffuse Streuer, die Blende, die Fourier-Linse auf einer Objektlichtbankanordnung angeordnet sind, die schwenkbar gegenüber dem holografischen Aufzeichnungsmaterial um eine senkrecht zur Oberflächennormale des Aufzeichnungsmaterials orientierte Schwenkachse gelagert ist. Vorzugsweise liegt die Schwenkachse in der Ebene des holografischen Aufzeichnungsmaterials.

Bei einer Weiterbildung oder alternativen Ausführungsform ist vorgesehen, dass die Referenzlichtoptik auf einer Referenzlichtbankanordnung angeordnet ist, die schwenkbar gegenüber dem Aufzeichnungsmaterial um eine senkrecht zur Oberflächennormale des Aufzeichnungsmaterials orientierte weitere Schwenkachse gelagert ist. Vorzugsweise liegt die weitere Schwenkachse in der Ebene des holografischen Aufzeichnungsmaterials.

Insgesamt werden somit Homogrammmaster und individualisierte Volumenreflexionshologramme geschaffen, die leichter bezüglich des flächig ausgebildeten, vorzugsweise individuellen, Musters zu verifizieren sind.

Als besonders vorteilhaft erweist sich eine Blende mit einer kreisförmigen Öffnung zu verwenden. Vorzugsweise ist ein Mittelpunkt der Blendenöffnung auf der optischen Anordnungsachse bei dem Herstellungsprozess angeordnet.

Eine vorgegebene Streukeulenbreite, d.h. ein Öffnungswinkel der Streukeule, wird dadurch ausgewählt, dass eine Größe einer Blendenöffnung im Verhältnis zur Brennweite der Fourier-Linse gewählt wird. Die Größe der Blendenöffnung ist hierbei eine flächige Ausdehnung. Ist die Blendenöffnung kreisförmig, so ist die Größe gleichbedeutend mit dem Radius bzw. Durchmesser der Blendenöffnung.

Ähnliches kann erreicht werden, indem der Blendenrand rau ausgebildet wird. Dies bedeutet, dass beispielsweise bei einer im Wesentlichen kreisförmigen Blendenöffnung die äußere Kontur nicht als Kreis ausgeführt ist, sondern einen unregelmäßig ausgebildeten kreisförmigen Rand aufweist. Dieser kann auch regelmäßig beispielsweise wellenförmig ausgebildet sein.

Vorzugsweise wird ein Streuer gewählt und eine streuende Struktur so ausgeleuchtet, dass sich eine schmale Streukeule oder ein Streukegel ergeben, die beispielsweise einen Grenzöffnungswinkel oder gemessen gegen eine optische Achse von etwa 20° aufweisen. Am Rand des angegebene Winkelbereichs ist die Intensität auf die Hälfte gegenüber der Lichtintensität in der Mitte der Streukeule oder des Streukegels abgefallen, wobei die in der Mitte der Streukeule oder des Streukegels auftretende Intensität eine Maximale Intensität darstellt. Eine solche Streukeule oder ein solcher Streukegel weisen eine bevorzugte Ausbreitungsrichtung des Lichts auf, welche durch die Mitte der Streukeule oder des Streukegels verläuft. Die Streukeule oder der Streukegel sollten in jedem Fall soweit aufgeweitet sein, dass die Streukeule oder der Streukegel eine Fourier-Linse möglichst über die gesamte Fläche der Linse ausleuchten können, wenn ein "Ursprung" oder Ausgangspunkt oder eine Ausgangsfläche der Streukeule oder des Streukegels in der Brennebene der Fourier-Linse angeordnet ist. Eine Ausführungsform sieht daher vor, dass der diffuse Streuer so ausgewählt wird, dass der diffuse Streuer eine rotationssymmetrische Streukeule mit einer Vorzugsrichtung aufweist, unter der eine maximale Lichtintensität auftritt, und eine Lichtintensität der Streukeule unter einem vorgegebenen Grenzwinkel, gemessen gegen die Vorzugsrichtung, auf die Hälfte der maximalen Lichtintensität abfällt, wobei der Grenzwinkel kleiner als 20° ist.

Bei einer anderen Ausführungsform wird der diffuse Streuer so ausgewählt, dass der diffuse Streuer ein Lambert`sches Streuverhalten zeigt. Auch hier gibt es eine bevorzugte Strahlungsrichtung, unter der eine maximale Intensität des gestreuten Lichts zu erkennen ist.

Besonders bevorzugt wird das erste kohärente Licht auf den diffusen Streuer so eingestrahlt, dass eine Symmetrieachse des in Richtung auf die Fourier-Linse austretenden oder abgestrahlten Lichts kollinear zu der optischen Anordnungsachse ist. Hierdurch kann erreicht werden, dass eine Geometrie des rekonstruierten Lichts des fertigen Hologramms durch eine Einstrahlrichtung des Referenzlichts festgelegt werden kann.

Bei einer besonders bevorzugten Ausführungsform wird das erste kohärente Licht auf den diffusen Streuer so eingestrahlt, dass eine Richtung einer maximalen Intensität des in Richtung auf die Fourier-Linse austretenden oder abgestrahlten Lichts kollinear zu der optischen Achse ist.

Um das Streuverhalten für die visuelle Betrachtung weiter zu optimieren, ist bei einer Ausführungsform vorgesehen, dass zwischen dem diffusen Streuer und der Blende ein räumlich variierendes Intensitätsfilter angeordnet wird. Dadurch kann das winkelabhängige Streuprofil, d.h. die winkelabhängige Lichtintensität, noch präziser eingestellt werden. So können ein trapezförmiges, sinusförmiges, dreieckförmiges oder gaußförmiges Streuprofil oder Ähnliches erzeugt werden.

Die hierdurch festgelegte Intensitätsverteilung des diffus gestreuten Lichts ist in den einzelnen individualisierten Hologrammen in den einzelnen kopierten Bildpunkten bei der Verifikation zu erkennen.

Einen ähnlichen Effekt kann man dadurch erzielen, dass man anstelle einer Blende, welche nur ein zentrales Loch aufweist, eine Loch-Ring-Blende verwendet, die zumindest einen kreissektorförmigen Ring aufweist, der vorzugsweise konzentrisch zu einer zentralen Lochöffnung der Blende ausgebildet ist. Vorzugsweise ist der Ring umlaufend um das Loch ausgebildet.

Nachfolgend wird die Erfindung unter Bezugnahme auf eine Zeichnung näher erläutert. Hierbei zeigen:
- Fig. 1: einen schematischen optischen Aufbau zum Herstellen eines Masterhologramms;
- Fig. 2: einen weiteren schematischen optischen Aufbau zum Herstellen eines Masterhologramms;
- Fig. 3: eine schematische Darstellung eines optischen Aufbaus zum Herstellen von individualisierten Hologrammen als Sicherheitselemente;
- Fig. 4: eine schematische Darstellung eines Sicherheitsdokuments mit einem individualisierten Hologramm;
- Fig. 5a: eine schematische Ansicht der Strahlführung bei einer Rekonstruktion eines Volumenreflexionshologramms eines flächigen Streuers nach dem Stand der Technik; und
- Fig. 5b: eine schematische Ansicht der Strahlführung bei einer Rekonstruktion eines Volumenreflexionshologramms mit einem hohlspiegelartigen flächigen Streuer.

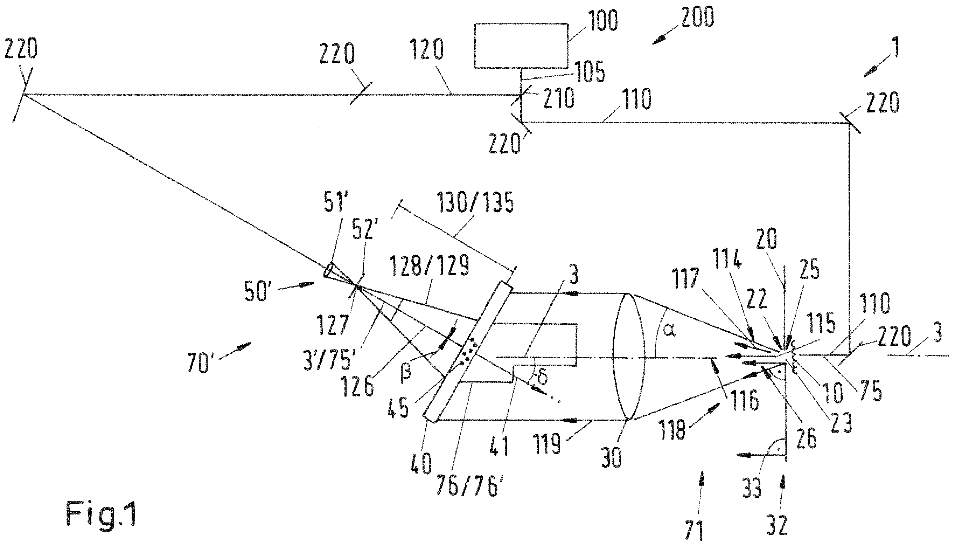

In Fig. 1 ist schematisch ein optischer Aufbau zum Herstellen eines Masterhologramms für ein Kontaktkopierverfahren dargestellt.

In Fig. 1 ist ein optischer Aufbau 1 schematisch dargestellt, mit dem das Verfahren zur Herstellung eines Masterhologramms für ein Kontaktkopierverfahren ausführbar ist. Auf einer optischen Anordnungsachse 3 sind ein diffuser Streuer 10, eine Blende 20, eine Fourier-Linse 30 und ein holografisches Aufzeichnungsmaterial 40 angeordnet. Eine optische Achse 31 der Fourier-Linse 30 ist kollinear zur optischen Anordnungsachse 3. Vorzugsweise fallen die optische Achse 31 der Fourier-Linse 30 und die optische Anordnungsachse 3 zusammen. Eine Oberflächennormale 41 des holografischen Aufzeichnungsmaterials, welches als ebener, flächig ausgedehnter Hologrammfilm vorzugsweise auf Basis eines Fotopolymers ausgebildet ist, ist unter einem Winkel δ zur optischen Anordnungsachse 3 orientiert.

Die Blende 20 weist eine Blendenöffnung 22 auf. Die Blendenöffnung 22 ist auf der optischen Anordnungsachse 3 angeordnet, sodass diese durch die Blendenöffnung 22 verläuft. Vorzugsweise ist eine Mitte 23 der Blendenöffnung 22 auf der optischen Anordnungsachse 3 angeordnet. Eine durch die Blendenöffnung 22 festgelegte Blendenöffnungsebene 25 weist eine Oberflächennormale 26 auf, welche vorzugsweise kollinear zu der optischen Anordnungsachse 3 ist.

Der diffuse Streuer 10 ist in einer Brennebene 32 der Fourier-Linse 30 angeordnet. Diese ist als Sammellinse mit einer Brennweite f ausgebildet. Dies bedeutet, dass der diffuse Streuer 10 durch den Fokus der Fourier-Linse 30 verläuft. Eine Oberflächennormale 33 der Brennebene 32 ist kollinear zur optischen Anordnungsachse 3.

Der optische Aufbau 1 umfasst eine Lichtquelle 100, welche kohärentes Licht 105 erzeugt. Dieses wird bei der dargestellten Ausführungsform über Strahlführungselemente 200, welche einen Strahlteiler 210 umfassen, in erstes kohärentes Licht 110 und in zweites kohärentes Licht 120 geteilt. Über Umlenkspiegel 220 und Strahlformer 230 werden das erste kohärente Licht 110 und das zweite kohärente Licht 120 geführt und gegebenenfalls aufgeweitet und in Lichtfelder überführt, die aus parallel gerichteten kohärenten Lichtstrahlen bestehen.

Der diffuse Streuer 10 ist so ausgebildet, dass dieser das auftreffende erste gerichtete Licht 110 transmittiert und in diffus gestreutes Licht 115 überführt. Vorzugsweise weist das austretende diffus gestreute Licht 115 eine Charakteristik eines Lambertstrahlers auf. Über die Blende 20 bzw. die Blendenöffnung 22 wird das diffus gestreute Licht 115 eingeschränkt. Das so eingeschränkte diffus gestreute Licht 117 bildet ein Lichtfeld 118, das auf die Fourier-Linse 30 gelangt und von dort auf und in das holografische Aufzeichnungsmaterial 40 geleitet wird. Ein Öffnungswinkel α des eingeschränkten diffus gestreuten Lichts 117 gemessen gegen die Anordnungsachse 3 wird vorzugsweise so gewählt, dass hierdurch die Fourier-Linse 30 zumindest annährend gleichmäßig ausgeleuchtet wird. Das aus der Fourier-Linse 30 austretende Licht stellt dann das Objektlicht 119 für die Hologrammbelichtung dar.

Das zweite kohärente Licht 120, wird mittels einer Referenzlichtoptik 70 in ein von einer Quellregion 127 aus divergierendes Lichtfeld 128 überführt. Das von der Quellregion 127 aus divergierende Licht fällt als Referenzlicht 129 in das holografische Aufzeichnungsmaterial 40 ein. Ein Zentralstrahl 126 des divergierenden Lichtfelds 128 weist einen Winkel β gegenüber der Oberflächennormale 41 des holografischen Aufzeichnungsmaterials 40 auf. Dieser Winkel ist im dargestellten Fall Null. Das Objektlicht 119 und das Referenzlicht 129 treten von entgegengesetzten Seiten in das holografische Aufzeichnungsmaterial 40 ein, sodass in dem holografischen Aufzeichnungsmaterial 40 ein Volumentransmissionshologramm belichtet wird.

Die Durchstrahlung des diffusen Streuers 10 mit dem ersten kohärenten Licht 110 wird vorzugsweise so ausgeführt, dass das diffus gestreute Licht 115 eine symmetrische Intensitätsverteilung, d.h. eine Streukeule 114, mit einer Symmetrieachse 116 aufweist. Diese ist vorzugsweise kollinear mit der optischen Anordnungsachse 3 ausgerichtet, besonders bevorzugt fallen die Symmetrieachse 116 und die optische Anordnungsachse 3 zusammen. Besonders bevorzugt wird die Streuung so ausgeführt, dass eine maximale gestreute Intensität auf der Symmetrieachse 116 auftritt. Dies bedeutet, dass eine Vorwärtsstreurichtung eine höhere Intensität als die anderen Streurichtungen aufweist, sofern das erste kohärente Licht 110 auf der optischen Anordnungsachse 3 auf den diffusen Streuer 10 auftrifft.

Bei der einfachsten Ausführungsform der Fig. 1 wird das von der Quellregion 127 aus divergierende Licht mittels einer Referenzlichtoptik 70' erzeugt, die einen Raumfilter 50' umfasst. Bezugszeichen von körperlichen Komponenten und deren Eigenschaften sind hier jeweils mit einem nachgestellten Apostroph "'" gekennzeichnet. So können technisch gleiche Komponenten von der Referenzlichtoptik 70' von den entsprechenden Komponenten und deren Eigenschaften der Objektlichtoptik 71 unterschieden werden.

Der Raumfilter 50' umfasst eine Fokussierungsoptik 51' und eine Lochblende 52`. Die Fokussierungsoptik 51' fokussiert das zweite kohärente Licht 120 vor der Lochblende 52`, d.h. auf der von dem Aufzeichnungsmaterial 40 abgewandten Seite der Lochblende 52`.

Die Öffnung der Lochblende 52` bildet bei dieser Ausführungsform die Quellregion 127 von der aus das Licht divergiert. Über einen Abstand 130 der Quellregion 127 von dem holografischen Aufzeichnungsmaterial 40 wird eine Brennweite 135 des erzeugten "Hohlspiegels" festgelegt.

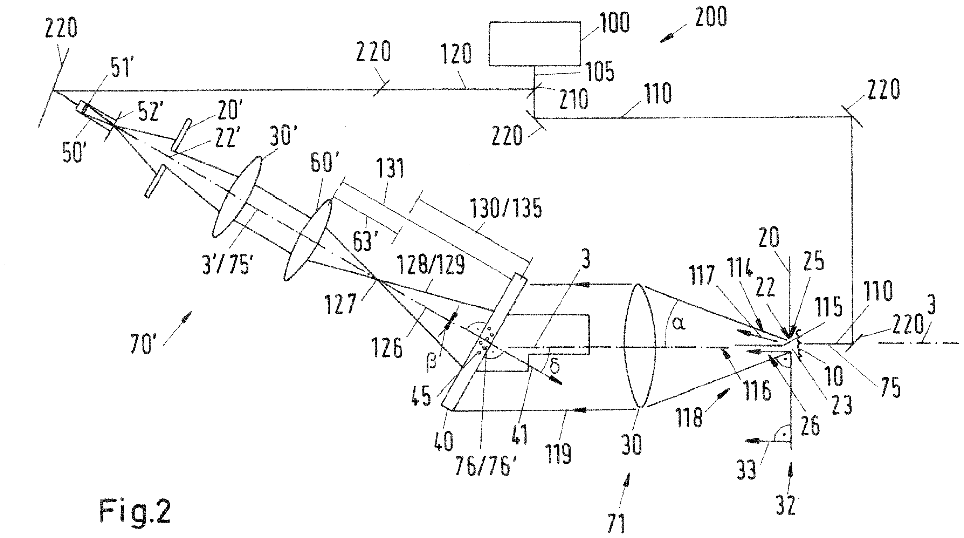

In Fig. 2 ist eine weitere Ausführungsform zum Herstellen eines Hologrammmasters in Form eines Masterhologramms gezeigt. Gleiche technische Merkmale sind in allen Figuren mit denselben Bezugszeichen gekennzeichnet.

Die Ausführungsform unterscheidet sich von der nach Fig. 1 dadurch, dass die Referenzlichtoptik 70' für eine verbesserte Anpassbarkeit und Justage ausgebildet ist. Die Referenzlichtoptik 70' ist in dieser Ausführungsform ähnlich zu der Objektlichtoptik 71 ausgebildet. In der Referenzlichtoptik 70' fehlt der Streuer 10 und ist durch den Raumfilter 50' ersetzt. Die weitere Fourier-Linse 30' erzeugt ein Lichtfeld 125` paralleler Strahlen, welches eine Fouriertransformation der durch die Lochblende 52' des Raumfilters 50' ausgebildeten Punktlichtquelle ist, wobei die Lochblende 52` sich in der Brennebene 35' der weiteren Fourier-Linse 30' befindet. Das aus dem Raumfilter 50' austretende Licht wird durch eine Blende 20' mit einer Blendenöffnung 22' eingegrenzt. Eine Oberflächennormale 33' der Blendenöffnungsebene 33` ist kollinear mit einer Weiteren Anordnungsachse 3`.

Die Quellregion 127 wird in dieser Ausführungsform durch eine Sammellinse 60` in deren Brennebene 62` und auf deren optischer Achse 61' erzeugt. Die Sammellinse 60` ist hierfür zwischen der weiteren Fourier-Linse 30' und dem holografischen Aufzeichnungsmaterial 40 in dem Lichtfeld 125` paralleler Strahlen angeordnet. Die Brennweite 135 des Hohlspiegels wird bei dieser Ausführungsform über die Wahl des Abstands 130` der Brennebene 62` von dem holografischen Aufzeichnungsmaterial 40 festgelegt. Der Abstand 131' der Sammellinse 60` von dem holografischen Aufzeichnungsmaterial 40 ist somit größer als die Brennweite 63` der Sammellinse 60` auf der dem holografischen Aufzeichnungsmaterial 40 zugewandten Seite.

Die Referenzlichtoptik 70' ist bei dieser Ausführungsform entlang der weiteren Anordnungsachse 3' ausgerichtet, die körperlich als Referenzlichtbankanordnung 75` ausgebildet sein kann. Entsprechend kann die Anordnungsachse 3 einer Objektlichtoptik 71 durch eine Objektlichtbankanordnung 75 ausgebildet sein. Die Objektlichtbankanordnung 75 und/oder die Referenzlichtbankanordnung 75` sind entsprechend jeweils vorzugsweise um eine Schwenkachse 76 bzw. weitere Schwenkachse 76`, die in der Ebene des holografischen Aufzeichnungsmaterials 40 liegen, schwenkbar. Hierdurch kann die Rekonstruktionsgeometrie für den erzeugten Hologrammmaster bzw. das Masterhologramm auf einfache Weise gewählt und angepasst werden. Die Schwenkachsen 76, 76' können zusammenfallen, sie müssen jedoch nicht kollinear sein.

Gezeigt und beschrieben ist die Referenzlichtoptik 70' mit sphärischen Komponenten. Die Sammellinse 60'könnte jedoch auch als zylindrische Linse ausgebildet sein.

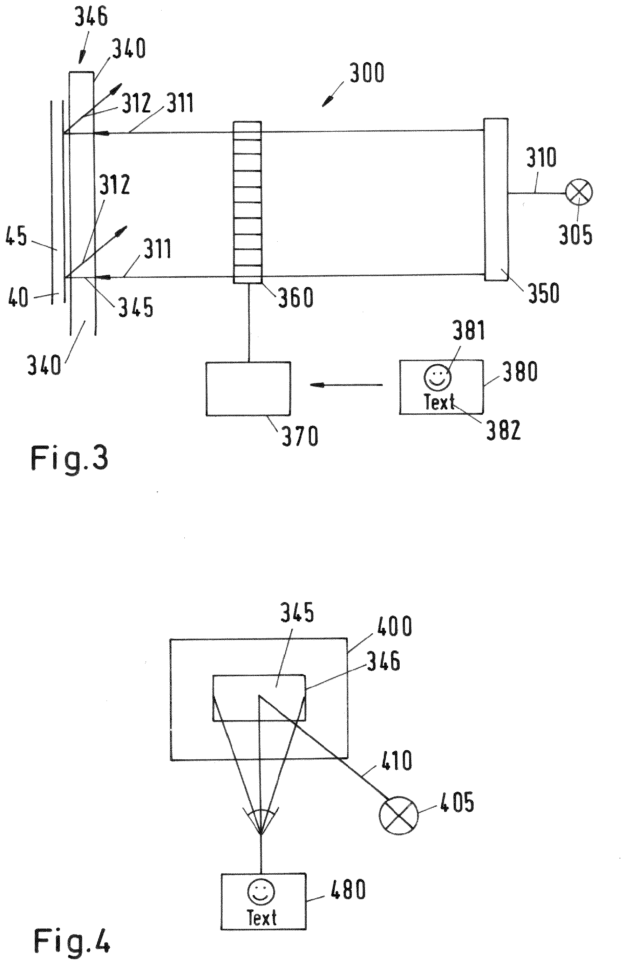

In Fig. 3 ist schematisch eine Vorrichtung 300 dargestellt, mit der anhand des in Fig. 1 oder 2 hergestellten Masterhologramms 45, das in dem Aufzeichnungsmaterial 40 ausgebildet ist, individualisierte Sicherheitselemente 346 in Form von kontaktkopierten Volumenhologrammen 345 erzeugt werden können. Anliegend an das Masterhologramm 45 wird erneut holografisches Aufzeichnungsmaterial 340 für ein herzustellendes individualisiertes Sicherheitselement 346 angeordnet. Kohärentes Licht 310 einer Lichtquelle 305, insbesondere eines Lasers, welches mit seiner Wellenlänge an die Wellenlänge zur Erzeugung des Masterhologramms 45 angepasst ist, wird über Strahlformungselemente 350 auf einen räumlichen Lichtmodulator 360, beispielsweise einen LCD-Schirm, der zweidimensional oder eindimensional sein kann, geführt. Ist der LCD-Schirm eindimensional, so kann das Masterhologramm zeilenweise kopiert werden. Auch bei zweidimensionalen räumlichen Lichtmodulatoren erfolgt das Kopieren häufig zeilenweise, in dem der Lichtmodulator und das Masterhologramm zeilenweise abgetastet werden. Der Lichtmodulator 360 ist mit einer Steuereinrichtung 370, beispielsweise in Form eines Computers, verknüpft, welche die individualisierende Information 380 erfasst oder empfängt und den räumlichen Lichtmodulator 360 entsprechend steuert. Die Individualisierungsinformation 380 umfasst beispielsweise ein Portraitbild 381 und Angaben, z.B. den Namen, ein Geburtsdatum etc., in Form von alphanumerischem Text 382.

Das kohärente Licht 310 wird in dem räumlichen Lichtmodulator 360 hinsichtlich der Intensität räumlich moduliert und trifft dann als Referenzlicht 311 auf das holografische Aufzeichnungsmaterial 340. Dieses Referenzlicht 311 durchdringt das holografische Aufzeichnungsmaterial 340 und wird an dem Hologrammmaster 45 in das holografische Aufzeichnungsmaterial 340 als Objektlicht 312 zurückgebeugt. Abhängig von der durch die Modulation erzeugten Lichtintensität variiert die Intensität des Objektlichts 312 und des Referenzlichts 311 lokal. Die Variation kann schwarz/weißartig oder graustufenartig ausgeführt sein. Je nach Intensität, die durch räumliche Modulation erzeugt wird, wird die Intensität bzw. die sich ergebende Beugungseffizienz des kopierten Hologramms 345, das sich in dem Aufzeichnungsmaterial 340 als Sicherheitselement 346 ergibt, variiert.

In Fig. 4 ist ein Sicherheitsdokument dargestellt, in welchem ein im Kontaktkopierverfahren hergestelltes Sicherheitselement 346 in Form eines Volumenreflexionshologramms 345 integriert ist. Dieses wird mit Licht 410 einer Lichtquelle 405 beleuchtet, sodass das Hologramm 345 rekonstruiert. Die Lichtquelle 405 kann eine Weißlichtquelle sein. Eine Erfassungseinrichtung 420 oder ein menschlicher Betrachter erfasst dann die mit unterschiedlicher Intensität lokal kopierten Anteile des Masterhologramms. Dies bedeutet, dass eine schwarz/weiß oder graustufig ausgebildete Information 480 in der Farbe wahrgenommen wird, die mit der Wellenlänge korrespondiert, die zum Kopieren bzw. Erzeugen der Hologramme verwendet wurde. Hierbei sind kleine Wellenlängenänderungen aufgrund von Schrumpfungsprozessen bei der Herstellung der Hologramme 45/345 zu berücksichtigen. Das lokale Streuverhalten der einzelnen Bildpunkte entspricht dem des über eine Blende eingeschränkten Lichtfeldes des diffusen Streuers, der zur Herstellung des ursprünglichen Masterhologramms 45 verwendet wurde. Diesem ist die hohlspiegelartige Eigenschaft des ursprünglichen Referenzlichts bei der Erzeugung des Masterhologramms aufgeprägt. Das Bild ist daher senkrecht über dem Dokument in einem Abstand der dem Abstand 135 der Quellregion 127 von dem Aufzeichnungsmaterial 40 bei der Hologrammmastererzeugung entspricht, vollflächig gut zu erfassen.

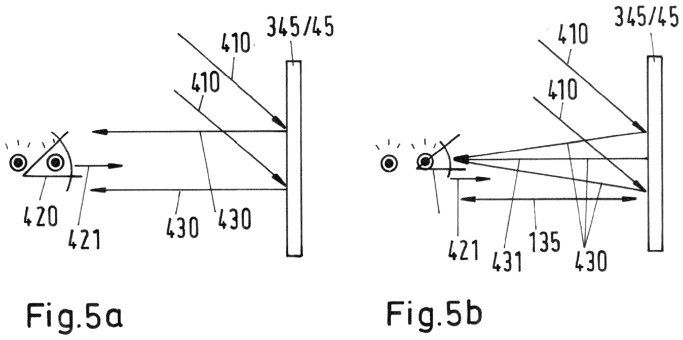

In Fig.5a ist die Strahlführung bei der Rekonstruktion (ohne Berücksichtigung der Streueigenschaft) für ein in Kontaktkopie hergestelltes Hologramm 345 bzw. das Masterhologramm 45 dargestellt. Im Vergleich dazu ist in Fig. 5b die Strahlführung bei der Rekonstruktion eines Hologramms mit hohlspiegelartigem Streuer, wie es beispielsweise nach Fig. 1 oder 2 hergestellt oder gemäß Fig 3 kopiert ist. Das Rekonstruktionslichtlicht 410 wird in beiden Fällen unter ca. 45° eingestrahlt. Das gebeugte Licht 430 ist in Fig. 5a bei einem Hologramm gemäß dem Stand der Technik parallel zur Erfassungsrichtung 420.

Bei dem Gegenstand nach Fig. 5b ist ein Zentralstrahl 431 des gebeugten Lichts 430 kollinear zur Erfassungsrichtung 421 einer Erfassungseinrichtung 420. Insgesamt wird das gebeugte Licht 430 wie bei einem Hohlspiegel fokussiert. Die gesamte Information ist zuverlässig erfassbar, insbesondere auch mit einer Kamera.

Die gewählten Winkel für die Einstrahlung in das holografische Aufzeichnungsmaterial können bei anderen Ausführungsformen anders gewählt werden, insbesondere für das Objektlicht und das Referenzlicht gegenüber den Ausführungsformen nach Fig. 1 und 2 vertauscht werden.

Da im Herstellungsprozess kein großflächiger diffuser Streuer verwendet wird und dennoch ein flächiger Hologrammmaster hergestellt ist, lässt sich eine Langzeitreproduzierbarkeit eines solchen Sicherheitselements herstellen, da das Sicherheitselement nur von der geometrischen Ausgestaltung (insbesondere einer Blendenöffnungsgröße) und dem geometrischen Aufbau des diffusen Streuers und der im Strahlengang nachgeordneten Blende abhängig ist, wobei der geometrische Aufbau reproduzierbar auch mit unterschiedlichen diffusen Streuern erzeugbar ist.

Es versteht sich für den Fachmann, dass hier lediglich beispielhafte Ausführungsformen beschrieben sind. Weiterbildungen können die hier beschriebenen Merkmale in beliebiger Kombination nutzen, um die Erfindung auszuführen. Weitere Sicherheitsmerkmale können beispielsweise dadurch zugefügt werden, dass die Intensitätsverteilung des gestreuten Lichts räumlich variiert wird. Dies kann beispielsweise über einen Filter geschehen, welcher zwischen dem Streuer und der Blende oder gegebenenfalls vor dem Streuer im Strahlengang angeordnet wird. Ebenso ist es möglich, die Blendenform zu variieren oder eine Loch-Ring-Blende zu verwenden. Bei einer solchen Ausführungsform erhält man am Ende ein Sicherheitselement, bei dem die grafische "Schwarz/Weiß-" oder "Graustufeninformation" monochromatisch in einem Winkelbereich beobachtbar ist, der der eingeschränkten Streukeule des Lichtfeldes des diffusen Streuers entspricht, dann für abweichende Winkel, die größer als die Streukeule sind, verschwindet, jedoch bei großen Abweichungen, welche mit Licht korrespondieren, welches durch den Ring der Ringblende getreten ist und somit mit einem "größeren" Streuwinkel korrespondiert, erneut auftritt. Hierdurch entstehen bisher nicht erzeugbare neuartige Effekte, welche mit einer holografisch abgebildeten realen Streuscheibe als Masterhologramm nicht realisierbar sind. Insbesondere können Intensitätsfilter einen winkelabhängigen Verlauf der diffusen Streuung beeinflussen. So lassen sich Volumenreflexionshologramme herstellen, welche Streuverhalten zeigen, die sich mit einer normalen Streuscheibe und dem aus dem Stand der Technik bekannten Herstellungsverfahren nicht in ein Hologramm belichten lassen.

### Bezugszeichenliste

- 1: optischer Aufbau
- 3: optische Anordnungsachse
- 3: weitere optische Anordnungsachse
- 10: diffuser Streuer
- 20: Blende
- 20': weitere Blende
- 22: Blendenöffnung
- 22': weitere Blendenöffnung
- 23: Mitte
- 23': weitere Mitte
- 25: Blendenöffnungsebene
- 25': weitere Blendenöffnungsebene
- 26: Normale der Blendenöffnungsebene
- 26': weitere Normale der Blendenöffnungsebene
- 30: Fourier-Linse
- 30': weitere Fourier-Linse
- 31: optische Achse
- 31': weitere optische Achse
- 32: Brennebene
- 33: Normale
- 33': weitere Normale
- 34: weitere Brennebene
- 35': Brennebene
- 36': weitere Brennebene
- 40: holografisches Aufzeichnungsmaterial
- 41: Oberflächennormale
- 45: Masterhologramm
- 50': Raumfilter
- 51': Fokussieroptik
- 52': Lochblende
- 60': Sammellinse
- 61': optische Achse
- 62`: Brennebene
- 63`: Brennweite
- 70: Referenzlichtoptik
- 71: Objektlichtoptik
- 100: Lichtquelle
- 110: erstes kohärentes Licht
- 114: Streukeule
- 115: diffus gestreutes Licht
- 116: Symmetrieachse
- 117: eingeschränktes diffus gestreutes Licht
- 118: Lichtfeld
- 119: Objektlicht
- 120: zweites kohärentes Licht
- 125: Lichtfeld paralleler Stahlen
- 126: Zentralstrahl
- 127: Quellregion
- 128: divergierendes Lichtfeld
- 129: Referenzlicht
- 130: Abstand
- 131: Abstand
- 135: Brennweite
- 200: Strahlführungseinrichtung
- 210: Strahlteiler
- 220: Umlenkspiegel
- 230: Strahlformer
- 300: Vorrichtung zum Ausführen von Kontaktkopien
- 305: Lichtquelle
- 310: kohärentes Licht
- 311: Referenzlicht
- 312: Objektlicht
- 340: holografisches Aufzeichnungsmaterial
- 345: (Volumenreflexions-)Hologramm
- 346: als Hologramm ausgebildetes Sicherheitselement
- 350: Strahlformungseinrichtung
- 360: räumlicher Lichtmodulator
- 370: Steuereinrichtung
- 380: Individualisierungsinformation
- 381: Portraitbild
- 382: Text
- 400: Sicherheitsdokument
- 405: Lichtquelle
- 410: Licht
- 420: Erfassungseinrichtung
- 430: gebeugtes Licht
- 431: Zentralstrahl
- 480: Information
- α: Öffnungswinkel der begrenzten Streukeule
- β: Einstrahlwinkel des Referenzlichts gegenüber Oberflächennormale des Aufzeichnungsmaterials
- δ: Einstrahlwinkel des Objektlichts gegenüber Oberflächennormale des Aufzeichnungsmaterials

## Patentansprüche

1. Verfahren zum Herstellen eines Masterhologramms (45) für ein Kontaktkopierverfahren umfassend die Schritte:
Erzeugen von erstem kohärentem Licht (110) und hierzu kohärentem zweiten kohärenten Licht (120),
Einstrahlen des ersten kohärenten Lichts (110) auf den diffusen Streuer (10) zum Erzeugen diffus gestreuten Lichts (115), das durch eine unmittelbar benachbart zu dem diffusen Streuer (10) angeordnete Blende (20) eingegrenzt und von einer Fourier-Linse (30), in deren einer Brennebene (32) der diffuse Streuer angeordnet ist, in das holografische Aufzeichnungsmaterial (40) als Objekt-Licht (119) geleitet wird, und das zu dem ersten kohärenten Licht (110) kohärente zweite Licht (120) von einer von der Fourier-Linse (30) abgewandten Seite des holografischen Aufzeichnungsmaterials (40) in das holografische Aufzeichnungsmaterial (40) als ein Referenzlicht (129) eingestrahlt wird, um in dem holografischen Aufzeichnungsmaterial (40) ein flächiges Reflexionsvolumenhologramm (45) auszubilden,
**dadurch gekennzeichnet, dass**
das Referenzlicht (129) als von einer punktförmigen oder strichförmigen Quelleregion aus divergierendes Lichtfeld erzeugt wird.

2. Verfahren nach Anspruch 1, **dadurch gekennzeichnet, dass** die punktförmige Quellregion des Referenzlichts (129) mittels eines Raumfilters (50`) erzeugt wird, der eine Fokussierungsoptik (51') und eine Lochblende (52`) umfasst oder die strichförmige Quellregion mittels einer Fokussierungsoptik und einer Spaltblende erzeugt wird.

3. Verfahren nach Anspruch 1, **dadurch gekennzeichnet, dass** aus dem zweiten kohärenten Licht (120) zunächst ein Lichtfeld (125) paralleler Strahlen erzeugt wird und die punktförmige Quellregion (127) als Fokuspunkt einer Sammellinse (60`) oder die strichförmige Quellregion als Fokussierungslinie einer zylindrischen Sammellinse erzeugt wird, die um mehr als eine Brennweite der jeweiligen Sammellinse (60`) beabstandet von dem holografischen Aufzeichnungsmaterial (40) in das Lichtfeld (125) paralleler Strahlen angeordnet wird.

4. Verfahren nach einem der vorangehenden Ansprüche, **dadurch gekennzeichnet, dass** der diffuse Streuer (10), die Blende (20), die Fourier-Linse (30) und das holografische Aufzeichnungsmaterial (40) auf einer optischen Anordnungsachse (3) angeordnet werden, so dass eine optischen Achse (31) der Fourier-Linse (30) und eine Oberflächennormale (26) einer Blendenöffnungsebene (25) der Blende (20) kollinear zur optischen Anordnungsachse (3) sind und die optische Anordnungsachse (3) und ein Zentralstrahl (126) des von der punktförmigen oder strichförmigen Quellquellregion (127) aus divergierenden Referenzlichts (129) nicht kollinear zueinander sind.

5. Vorrichtung zum Herstellen eines Masterhologramms (45) für ein Kontaktkopierverfahren umfassend:
einen diffusen Streuer (10),
eine Blende (20),
eine Fourier-Linse (30) und
ein holografisches Aufzeichnungsmaterial (40) sowie
mindestens eine Lichtquelle (405) zum Erzeugen kohärenten ersten Lichts (110) und zu dem ersten kohärenten Licht (110) kohärenten zweiten kohärenten Lichts (120),
wobei der diffuse Streuer (10), die Blende (20), die Fourier-Linse (30) und
das holografische Aufzeichnungsmaterial (40) auf einer optischen Anordnungsachse (3) angeordnet sind, so dass eine optischen Achse (31) der Fourier-Linse (30) und eine Oberflächennormale (26) einer Blendenöffnungsebene (25) der Blende (20) kollinear zur optischen Anordnungsachse (3) orientiert sind, wobei die Blende (20) zwischen dem diffusen Streuer (10) und der Fourier-Linse (30) unmittelbar an den diffusen Streuer (10) angrenzend angeordnet ist und der diffuse Streuer (10) in einer Brennebene (32) der Fourier-Linse (30) angeordnet ist, und
das kohärente erste Licht (110) auf den diffusen Streuer (10) eingestrahlt ist, um hierdurch das diffus gestreute Licht (115) zu erzeugen, welches mittels der Blende (10) eingegrenzt und mittels der die Fourier-Linse (30) in das holografische Aufzeichnungsmaterial (40) als Objekt-Licht (119) geleitet ist, und mittels einer Referenzlichtoptik (70`) für das kohärente zweite Licht (120) eine punktförmige oder strichförmige Quelleregion (127) erzeugt wird, von der ein divergierendes Lichtfeld (128) von einer von der Fourier-Linse (30) abgewandten Seite des holografischen Aufzeichnungsmaterials (40) in das holografische Aufzeichnungsmaterial (40) als ein Referenzlicht (129) eingestrahlt ist, um in dem holografischen Aufzeichnungsmaterial (40) ein flächiges Reflexionsvolumenhologramm (45) über eine Interferenz des Referenzlichts (129) mit dem Objektlicht (119) auszubilden.

6. Vorrichtung nach Anspruch 5 **dadurch gekennzeichnet, dass** die Referenzlichtoptik (70`) eine Lochblende oder Spaltbelende (20'), eine weitere Fourier-Linse (30`) und eine Sammellinse umfasst und die Loch- oder Spaltblende, die eine weitere Fourier-Linse, die Sammellinse (60') und das holografische Aufzeichnungsmaterial (40) auf einer weiteren optischen Anordnungsachse (3`) angeordnet sind, wobei die Lochoder Spaltblende (52`) in einer von dem holografischen Aufzeichnungsmaterial (40) abgewandten Brennebene (35`) der weiteren Fourier-Linse (30`) angeordnet ist, und eine optischen Achse (31') der weiteren Fourier-Linse (30`) und eine Oberflächennormale (26') einer Blendenöffnungsebene (25') der Lochblende/oder Spaltblende (52`) kollinear zur weiteren optischen Anordnungsachse (3) sind, und die Sammellinse (60`) zwischen der weiteren Fourier-Linse (30`) und dem holografischen Aufzeichnungsmaterial (40) angeordnet ist, wobei eine optische Achse (61') der Sammellinse (60`) parallel zur weiteren Anordnungsachse (3`) orientiert ist und ein Abstand (131') der Sammellinse (60`) von dem holografischen Aufzeichnungsmaterial (40) größer als deren Brennweite auf der dem holografischen Aufzeichnungsmaterial (40`) zugewandten Seite ist, so dass deren Fokuspunkt oder deren Fokusline als punkt- oder strichförmige Quellregion (127`) für das hieraus divergierende Lichtfeld (128) des Referenzlichts (129) dient, das in dem holografischen Aufzeichnungsmaterial (40) mit dem Objektlicht (128) interferiert.

7. Vorrichtung nach Anspruch 5, **dadurch gekennzeichnet, dass** die Referenzlichtoptik (70`) eine Loch- oder Spaltblende (52`) und eine Fokussieroptik (50`) zum Fokussieren des zweiten kohärenten Lichts (120) auf oder vor der Loch- oder Spaltblende (52`) umfasst, wobei die Öffnung der Loch- oder Spaltblende als Quellregion (127) für das divergierende Lichtfeld (128) des Referenzlichts (129) dient, wobei die Loch- oder Spaltblende (52`) und die Fokussieroptik (50`) auf einer weiteren Anordnungsachse (3`) so angeordnet sind, dass ein Zentralstahl (126) des divergierenden Lichtfelds (128) des Referenzlichts (129) kollinear mit der weiteren Anordnungsachse (3`) ist.

8. Vorrichtung nach Anspruch 6 oder 7, **dadurch gekennzeichnet, dass** die Anordnungsachse (3`) und die weitere Anordnungsachse (3`) nicht kollinear sind.

9. Vorrichtung nach einem der Ansprüche 5 bis 8, **dadurch gekennzeichnet, dass** zumindest der diffuse Streuer (10), die Blende (20), die Fourier-Linse (30) auf einer Objektlichtbankanordnung (75) angeordnet sind, die schwenkbar gegenüber dem holografischen Aufzeichnungsmaterial (40) um eine senkrecht zur Oberflächennormale (41) des holografischen Aufzeichnungsmaterials (40) orientierte Schwenkachse (76) gelagert ist.

10. Vorrichtung nach einem der Ansprüche 5 bis 9, **dadurch gekennzeichnet, dass** die Referenzlichtoptik (70`) auf einer Referenzlichtbankanordnung (75`) angeordnet ist, die schwenkbar gegenüber dem holografischen Aufzeichnungsmaterial (40) um eine senkrecht zur Oberflächennormale (41) des holografischen Aufzeichnungsmaterials (40) orientierte weitere Schwenkachse (76`) gelagert ist.

11. Hologrammmaster, der ein flächiges Volumenreflexionshologramm (45) aufweist, das in dem holografischen Aufzeichnungsmaterial (40) mit einem Verfahren nach einem der Ansprüche 1 bis 4 hergestellt ist.

12. Verfahren zum Herstellen eines individualisierten Hologramms (345) in einem Kontaktkopierverfahren umfassend die Schritte:
- Bereitstellen eines reflektierend beugenden Hologrammmasters (45);
- Anordnen eines holografischen Aufzeichnungsmaterials (340) auf dem Hologrammmaster (45);
- Erfassen und/oder Empfangen von Individualisierungsdaten (380);
- Erzeugen kohärenten Lichts (310);
- räumliches Modulieren des erzeugten kohärenten Lichts anhand der Individualisierungsdaten; und
- Einstrahlen des räumlich modulierten Lichts durch das holografische Aufzeichnungsmaterial (340) als Referenzlicht (311) auf den Hologrammmaster (45), so dass dieser Licht in das holografische Aufzeichnungsmaterial (340) als Objektlicht (312) zurückbeugt und in dem holografischen Aufzeichnungsmaterial (340) ein Volumenreflexionsholgramm (345) belichtet wird,
**dadurch gekennzeichnet, dass**
der Hologrammmaster (45) nach einem Verfahren der Anspruche 1 bis 4 hergestellt ist oder als Kontaktkopie eines Hologramms (45) hergestellt ist, dass mit einem Verfahren der Anspruche 1 bis 4 hergestellt ist.

13. Individualisierten Hologramms (345), **dadurch gekennzeichnet, dass** dieses ein gemäß einem individuellen räumlichen Muster mit variierender Beugungseffizienz kopiertes Volumenreflexionshologramm (45) eines hohlspiegelartigen flächigen diffusen Streuers ist.
